# EUROPÄISCHE PATENTSCHRIFT

(11) **EP 0 680 456 B1**
(45) Veröffentlichungstag und Bekanntmachung des Hinweises auf die Patenterteilung: **03.03.1999**
(21) Anmeldenummer: 95900720.4
(22) Anmeldetag: 09.11.1994
(51) Int. Cl.: C02F 1/78, F24D 17/00

(54) **VERFAHREN ZUR DESINFEKTION VON WARMWASSERVERSORGUNGEN**
PROCESS FOR DISINFECTING HOT WATER SUPPLY SYSTEMS
PROCEDE DE DESINFECTION D'INSTALLATIONS DE DISTRIBUTION D'EAU CHAUDE

(30) Priorität: 19.11.1993 CH 3460/93
(43) Veröffentlichungstag der Anmeldung: 08.11.1995
(73) Patentinhaber: CARBAGAS, 3097 Liebefeld (CH)
(72) Erfinder: LABERGE, Fabrice, CH-1700 Fribourg (CH)
(74) Vertreter: BOVARD AG - Patentanwälte
(86) Internationale Anmeldenummer: EP9403751
(87) Internationale Veröffentlichungsnummer: WO9513989

(56) Entgegenhaltungen:
- EP-A- 0 372 293
- EP-A- 0 442 254
- DE-A- 2 059 859

## Beschreibung

Gegenstand der vorliegenden Erfindung ist ein Verfahren zur Desinfektion von warmem Gebrauchswasser in Warmwasserversorgungen von Gebäuden. Das Verfahren dient insbesondere zur Abtötung von wärmestabilen Bakterien, welche sich bei Temperaturen zwischen 40 und 60°C im Wasser entwickeln. Das Verfahren ist besonders nützlich zur Desinfektion von Warmwasserleitungen in Spitälern.

Seit dem erstmaligen Auftreten der sogenannten Legionärskrankheit im Jahr 1976 ist bekannt, dass der Erreger dieses Leidens, die *legionella pneumophila* nicht ungewöhnlich ist und in der Natur sehr weit verbreitet ist. Es hat sich gezeigt, dass Temperaturen bis zu 45°C für die Entwicklung der genannten Erreger günstig sind. Da Temperaturen um 50°C in Warmwasserversorgungen nicht ausreichend sind um diese Mikroorganismen abzutöten, wird das Wasser von Warmwasserversorgungen in der Regel auf höhere Temperaturen erwärmt. Dies ist für Spitäler mit nicht unbeträchtlichen Energiekosten verbunden und fördert überdies die Ablagerungen in Leitungssystemen.

In Spitälern ist die intern übertragene Legionellen-Lungenentzündung zu einem wichtigen Problem geworden. Während für die meisten gesunden Menschen die Legionellen keine Krankheit verursachen, können diese jedoch bei kranken oder geschwächten Personen zu einem Krankheitsausbruch führen. Da das Problem bekannt ist, wurden verschiedene Methoden vorgeschlagen, um in den Warmwasserverteilungssystemen in Spitälern diese Bakterien abzutöten. Als Methoden wurden die Hyperchlorierung, die thermische Behandlung, die Ozonisierung, die Bestrahlung mit UV sowie der Zusatz von Metallionen wie Kupfer- und Silberionen vorgeschlagen. Die einfachste Methode war bisher die thermische Behandlung des Wasser. Die hat jedoch den Nachteil, dass die Energiekosten für die Wasseraufbereitung höher sind und dass das Wasser mit sehr hohen Temperaturen aus den Hähnen austritt. Die Hyperchlorierung besitzt den Hauptnachteil, dass die Leitungssysteme dadurch korrodieren und dass gegebenenfalls karcinogene Nebenprodukte entstehen. Bei der UV-Behandlung können Probleme entstehen, wenn auf der Strahlenquelle Kalkablagerungen entstehen, wodurch die Effizienz der Behandlung vermindert wird. Ebenso kann der Wasserkontakt den Lampen schaden. Bei der Behandlung mit Metallionen besteht der Hauptnachteil darin, dass das Wasser mit chemischen Substanzen versetzt werden muss, welche im Wasser bleiben. Dies kann zu unerwünschten Reaktionen beim Verbraucher führen und zur Akkumulation von Schwermetallionen im Abwasser führen.

Die Ozonbehandlung besitzt den Vorteil, dass nur ein kurzer Kontakt mit den Bakterien oder Viren erforderlich ist, um diese abzutöten. Der Literatur kann entnommen werden, dass eine Dosierung von 1 bis 2 mg/l Ozon für eine Behandlung von Gebrauchswasser zweckmässig ist. Da sich Ozon verhältnismässig schnell zersetzt und Ozon andererseits in hohen Konzentrationen unerwünschte Eigenschaften aufweist, ist es erforderlich, dass die Dosierung des Ozons in Anpassung der Wasserverteilungsanlage genau dosiert wird. Einerseits muss die Ozonkonzentration unterhalb derjenigen Werte liegen, welche eine schädliche Auswirkung auf die Wasserverbraucher ausüben könnte. Andererseits muss jedoch die Ozonkonzentration genügend sein, um die schädlichen Organismen im Wasser abzutöten. Durch die Eigenschaften des Ozons war seine Verwendung bisher für die Desinfektion von Warmwasserversorgungen mit Problemen verbunden, die den Einsatz einschränkten.

In der EP-A-0372293 ist eine Brauchwasser-Erwärmungsanlage beschrieben, bei welcher ebenfalls eine Entkeimung durch eine Ozonbehandlung vorgesehen ist. Hier wird die Ozonbehandlung vor der Erwärmung des Wassers durchgeführt, wobei das Ozon durch Kontakt mit einem Aktivkohlefilter vor der Erwärmung des Wassers wiederum zerstört wird. Es wurde gemäss der vorliegenden Erfindung gefunden, dass eine Ozonbehandlung des erwärmten Wassers durchgeführt werden kann, ohne dass ein nachträgliches Aktivkohlefilter erforderlich ist. Es wurde gefunden, dass eine Ozonkonzentration im System aufrechterhalten werden kann, die genügend ist, um die Keime abzutöten und gleichzeitig nicht zu unerwünschten Korrosionswirkungen in der Anlage führt.

Es ist demzufolge Aufgabe der vorliegenden Erfindung, ein Verfahren zur Verfügung zu stellen, welches die lückenlose Desinfektion von Warmwasserversorgungen von Gebäuden durch Ozonbehandlung erlaubt und eine präzise Dosierung und exakte Steuerung der Ozonkonzentration ermöglicht wird, wobei der Verbraucher in keiner Weise den Wirkungen des Ozons ausgesetzt wird.

Es wurde gefunden, dass diese Anforderungen durch das erfindungsgemässe Verfahren erfüllt werden.

Gegenstand der vorliegenden Erfindung ist somit ein Verfahren zur Ozonbehandlung von Warmwasser zu dessen Desinfektion in einer Warmwasserversorgungsanlage eines Gebäudes, welche Anlage eine Zuleitung, ein Wärmeübertragungsmittel, eine Ozonbehandlungsvorrichtung und ein Verteilungssystem, das zu den Verbrauchern führt, umfasst, das dadurch gekennzeichnet ist, dass das Warmwasser, das vom Wärmeübertragungsmittel unter Reduktion des Druckes in ein Behandlungsgefäss mit der Ozonbehandlungsvorrichtung geleitet wird, damit der Druck im Behandlungsgefäss kleiner ist als der Betriebsdruck der Warmwasserversorgungsanlage, im Behandlungsgefäss ein ozonhaltiges Gas kontinuierlich in das Wasser eingeleitet wird, dieses blasenförmig durch das Wasser durchtritt, wobei Ozon an das Wasser abgegeben wird, und das Gas anschliessend im oberen Teil des Gefässes in eine Gasphase übertritt, von welcher das Gas abgeleitet wird, und das behandelte Wasser anschliessend unter Erhöhung des Druckes auf den Betriebsdruck der Warmwasserversorgungsanlage dem Verteilungssystem des Gebäudes zugeführt wird.

Gegenstand der Erfindung ist ebenfalls eine Apparatur zur Ozonbehandlung von Warmwasser zu dessen Desinfektion in einer Warmwasserversorgungsanlage eines Gebäudes, die gekennzeichnet ist durch
eine Wasserzufuhrleitung,
ein Wärmeübertragungsmittel zur Erwärmung des Wassers,
ein Behandlungsgefäss mit
   einer Warmwasserzuleitung mit einem Reduzierventil zur Verminderung des höheren Betriebsdruckes des Leitungssystems auf den tieferen Druck des Behandlungsgefässes,
   einem Gerät zur Herstellung eines ozonhaltigen Gases mit einer Zuleitung zum Behandlungsgefäss, und
   einer Gasableitung für das aus dem Wasser austretende restliche Gas
mindestens eine Ableitung für das behandelte Wasser vom Behandlungsgefäss zum Verbraucher,
   eine Pumpe, die an der Ableitung angeordnet ist, und zur Erhöhung des Druckes des behandelten Wassers auf den höheren Betriebsdruck des Wasserleitungssystems dient.

Im Verfahren gemäss der vorliegenden Erfindung wird das Wasser, das von einer Wasserversorgung in das Leitungssystem eines Gebäudes geleitet wird, zuerst durch ein Wärmeübertragungssystem in ein Behandlungsgefäss geführt, wo eine Ozonbehandlung durch Durchleiten von einem ozonhaltigen Gas stattfindet. Der Druck in diesem Behandlungsgefäss ist kleiner als der Druck im Leitungssystem. Dies kann dadurch erzielt werden, indem die Einleitung des Wassers über ein Reduzierventil erfolgt, von welchem der Leitungsdruck reduziert wird. In das Behandlungsgefäss wird das ozonhaltige Gas eingeleitet, wobei das Gas nach der Behandlung im oberen Teil des Gefässes, d.h. oberhalb des Wasserspiegels aufgefangen und abgeleitet wird. Das behandelte Wasser wird anschliessend durch eine Pumpe wiederum auf den im Leitungssystem erforderlichen Druck gebracht. Das eingeleitete Ozon wird vorzugsweise fortlaufend durch einen Ozonisator hergestellt, worin Sauerstoff oder ein anderes Sauerstoff enthaltendes Gas eingeleitet wird und eine elektrische Entladung stattfindet. Die Ozonherstellung wird dabei durch ein Ozonanalysegerät gesteuert, welches über eine Sonde den Ozongehalt des behandelten Wassers feststellt. Das Behandlungsgerät, das vorzugsweise die Form einer Säule aufweist, besitzt ein Niveauregelungssystem, welches die Lage des Wasserspiegels feststellt und die Wasserzufuhr entsprechend regelt. Dies kann z. B. durch ein System mit einem Schwimmer oder mittels oberen und unteren Sonden geschehen. Bewegt sich der Wasserspiegel ausserhalb dem durch das Regelungssystem begrenzten Bereich, sorgt vorzugsweise ein weiteres Regelungssystem, das mit Sonden arbeiten kann, für eine Notabschaltung des Systems.

Das Behandlungssystem kann zusätzlich eine Vorrichtung zur Einstellung des pH-Wertes umfassen. Dabei stellt eine pH-Sonde den pH-Wert fest. Durch diese Sonde wird ein Neutralisierungssytem gesteuert, welches den pH-Wert auf den gewünschten neutralen Wert einstellt. Das oben aus dem Behandlungsgerät austretende Gas wird der Gebäudeabluft zugeführt, wobei vorher gegebenenfalls vorhandenes Ozon, beispielsweise durch einen Katalysator, vernichtet wird. Die Einleitung des Ozons im unteren Teil des Gefässes erfolgt in der Regel über eine Keramikfritte oder ein analoges Verteilungsmittel. Dadurch tritt das ozonenthaltende Gas, welches vorzugsweise Sauerstoff mit einem Gehalt zwischen 2 und 10 % O₃ mit, blasenförmig durch Wasser.

Das Behandlungssystem wird vorzugsweise elektronisch gesteuert, wobei die Ozonzufuhr, der pH-Wert und die Wasserzufuhr in Abhängigkeit des Wasserverbrauchs, des gemessenen Ozongehaltes im behandelten Wasser und des pH-Wertes des eingeleiteten Wassers gesteuert werden. Vorzugsweise besitzt das behandelte Wasser eine Temperatur um 50°C. Dies ist eine ideale Temperatur für Warmwasserversorgungen, da dadurch einerseits erhebliche Energiemengen gespart werden können und andererseits die Wassertemperatur bei den Hähnen nicht zu hoch ist, so dass Hautverbrennungen praktisch ausgeschlossen sind.

Damit eine lückenlose Ozonbehandlung ermöglicht wird, kann die Anlage mehr als eine, beispielsweise zwei, separat zuschaltbare Ozonerzeugungsvorichtungen aufweisen. Dadurch kann ohne Abschaltung des Systems eine dieser Vorrichtungen revidiert oder repariert werden. Ebenso kann das Behandlungsgefäss mit zwei oder mehr Ableitungen mit Pumpen versehen sein, damit der Betrieb auch bei Arbeiten an den Pumpen aufrechterhalten werden kann. Hierzu müssen die Pumpen durch entsprechende Ventile vom Wasserversorgungssystem abgetrennt werden können. Bei hohem Wasserbedarf könnten überdies zwei oder auch mehr Pumpensysteme parallel eingesetzt werden, um gegebenenfalls einen Druckabfall in der Wasserversorgung zu vermeiden.

Das System erlaubt eine wirksame Abtötung von Mikroorganismen wie insbesondere von *legionella pneumophila* in Warmwasserversorgungen von Gebäuden, insbesondere von Spitälern. Ist das Leitungssystem einmal frei von schädlichen Organismen, muss die Versorgung mit ozonbehandeltem Wasser lückenlos gewährleistet werden, da andernfalls wiederum eine Kontamination entweder über das zugeleitete Wasser oder aber von den Wasserhähnen her stattfinden kann. Vorzugsweise werden deshalb für eine effiziente Warmwasserbehandlung an einem Leitungsystem mindestens zwei Ozonbehandlungsapparaturen angeordnet, wobei bei einer Störung oder bei einer Wartung des einen Gerätes das andere die Ozonisierung des Leitungssystems übernehmen kann. In der Regel besitzt ein Wasserversorgungssystem für ein Gebäude einen Druck von 5x10⁵ Pa (5 bar). Im erfindungsgemäss eingesetzten Behandlungssystem beträgt der Arbeitsdruck vorzugsweise 0,5x10⁵ Pa (0,5 bar). Die Drücke des Warmwasserversorgungssystem können im Rahmen des Üblichen variiert werden. Ebenso kann der Druck im Behandlungsgefäss im Rahmen technisch sinnvoller Werte variiert werden.

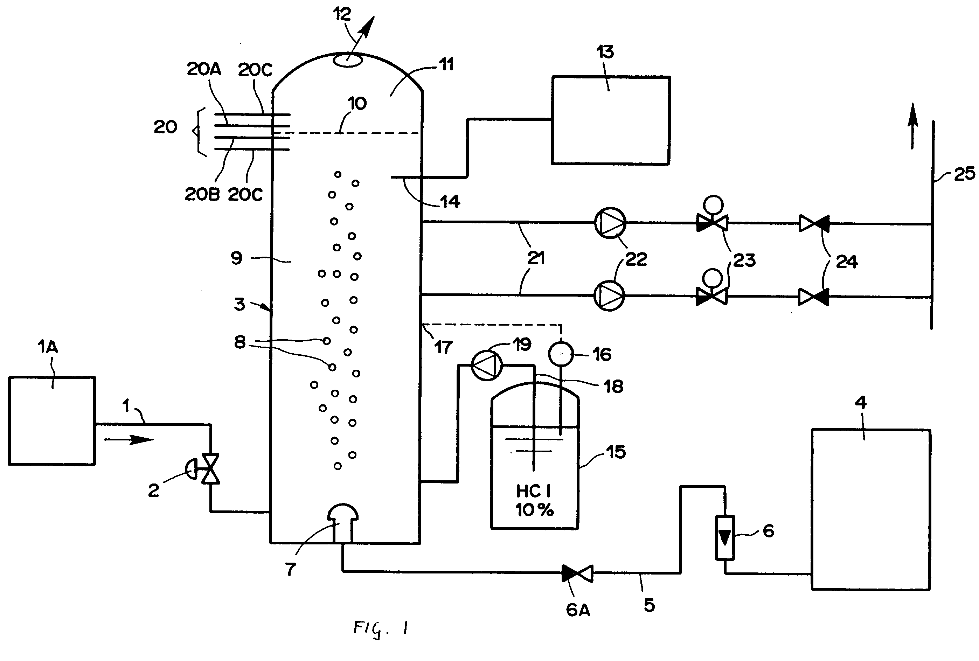

Die vorliegende Erfindung wird anhand der beiliegenden Zeichnung näher erläutert. Es zeigt die einzige Figur eine schematische Darstellung einer Vorrichtung zur Durchführung des erfindungsgemässen Verfahrens.

Anhand der Figur wird eine Ausführungsform des erfindungsgemässen Verfahrens näher erläutert. Durch die Zufuhrleitung 1 wird Wasser durch einen Wärmetauscher 1A geführt, wo es auf eine Temperatur von ca. 50°C erwärmt und über ein Reduzierventil 2 unten in das Behandlungsgefäss 3 in Säulenform eingeleitet wird. Das Behandlungsgefäss ist zu ca. 80% mit Wasser bis zur Linie des Wasserstandes 10 gefüllt. Das zur Ozonbehandlung verwendete Sauerstoffgas wird von einem Sauerstoffvorratsgefäss in den Ozonisierungsapparat 4 eingeleitet. Hier findet eine elektrische Entladung in Sauerstoff statt, wobei der Sauerstoff bis zu 10% mit Ozon angereichert wird. Das ozonhaltige Gas wird über das Leitungssystem 5 über das Stromreglerventil 6 und das Rückschlagventil 6A zum Verteilungsmittel 7, welches sich unten im Behandlungsgefäss befindet, geführt. Das Verteilmittel 7 ist vorzugsweise eine inerte Keramikfritte. Von dort perlen Blasen 8 des ozonhaltigen Sauerstoffes durch das Wasser in der Säule, wobei O₃ in das Wasser übertritt und das restliche Gas beim Wasserspiegel 10 in den Gasraum 11 der Säule eintritt und über die Ableitung zum Abluftsystem des Gebäudes geführt wird. Das abgeleitete ozonhaltige Gas wird gegebenenfalls über einen Katalysator geführt, um Reste des Ozons zu zerstören. Zur Steuerung der Zufuhr des ozonhaltigen Gases dient das Ozonanalysegerät 13, welches den Ozongehalt des behandelten Wassers 9 über eine Sonde 14 kontrolliert und das Ozonherstellungsgerät 4 steuert. Diese Vorrichtung gewährt dafür, dass die Ozonwerte des Behandlungswassers im gewünschten Bereich liegen. Im Ozonbehandlungsgefäss wird erforderlichenfalls ebenfalls der pH-Wert des Wassers eingestellt. Im vorliegenden Fall wird Wasser, das bei der Einleitung einen pH-Wert von ca. 8,2 besitzt auf pH 7,2 neutralisiert. Dies erfolgt durch die Salzsäurelösung, welche sich im Vorratsgefäss 15 befindet, welches über eine Leitung 18 mit einer Pumpe 19 mit dem Behandlungsgefäss 3 verbunden ist. Durch die pH-Sonde 17 wird der pH-Wert des behandelten Wassers im Gefäss festgestellt, wobei das pH-Meter 16 das Ein- und Ausschalten der Pumpe 19 steuert. Damit der Wasserspiegel 10 an der gewünschten Stelle der Behandlungssäule 3 gehalten werden kann, sind an entsprechender Stelle der Säule Sonden 20 für die Niveaueinstellung angeordnet. Die Sonde 20A meldet an das Steuersystem, dass der Wasserspiegel 10 an der oberen Grenze angelangt ist und veranlasst eine Drosselung der Wasserzufuhr. Die Sonde 20B meldet der Steuereinheit (nicht dargestellt) des Systems, dass der Wasserspiegel 10 bei der Minimumsmarke angelangt ist und veranlasst ein erhöhte Wasserzufuhr. Die beiden Sonden 20C sind Alarmsonden, welche der Systemsteuerung melden, dass der Wasserspiegel ausserhalb des normalen Niveaus liegt und demzufolge eine Abschaltung des Systems mit Alarm verursacht. Das behandelte Wasser wird über die Leitung 21 über die Kompressionspumpe 22 in das Leitungssystem 25 zur Versorgung des Gebäudes geführt. Die Leitung 21 weist die üblichen Regelungs- bzw. Rückschlagventile 23, bzw. 24, auf. Durch die Pumpen 22 wird der Flüssigkeitsdruck von 0,5x10⁵ Pa (0,5 bar) wiederum auf die 5x10⁵ Pa (5 bar) des Leitungssystems erhöht.

## Patentansprüche

1. Verfahren zur Ozonbehandlung von Warmwasser zu dessen Desinfektion in einer Warmwasserversorgungsanlage eines Gebäudes, welche Anlage eine Zuleitung (1), ein Wärmeübertragungsmittel (1A), eine Ozonbehandlungsvorrichtung (3, 4, 5, 6, 7) und ein Verteilungssystem (25), das zu den Verbrauchern führt, umfasst, dadurch gekennzeichnet, dass das Warmwasser vom Wärmeübertragungsmittel (1A) unter Reduktion des Druckes in ein Behandlungsgefäss (3) mit der Ozonbehandlungsvorrichtung (4, 5, 6, 6A, 7) geleitet wird, damit der Druck im Behandlungsgefäss (3) kleiner ist als der Betriebsdruck der Warmwasserversorgungsanlage, im Behandlungsgefäss ein ozonhaltiges Gas (8) kontinuierlich in das Wasser (9) eingeleitet wird, dieses blasenförmig durch das Wasser durchtritt, wobei Ozon an das Wasser abgegeben wird, und das Gas anschliessend im oberen Teil (11) des Gefässes in eine Gasphase übertritt, von welcher das Gas abgeleitet wird, und das behandelte Wasser anschliessend unter Erhöhung des Druckes auf den Betriebsdruck der Warmwasserversorgungsanlage dem Verteilungssystem (25) des Gebäudes zugeführt wird.

2. Verfahren nach Anspruch 1, dadurch gekennzeichnet, dass das Behandlungsgefäss (3) die Form einer Säule besitzt.

3. Verfahren nach Anspruch 1 oder 2, dadurch gekennzeichnet, dass der pH-Wert durch ein automatisches, durch eine Sonde (17) gesteuertes Neutralisationssystem, eingestellt wird, indem Säure, bzw. Base in das Wasser eingeleitet wird.

4. Verfahren nach einem der Ansprüche 1 bis 3, dadurch gekennzeichnet, dass das ozonhaltige Gas Sauerstoff ist, welches durch ein Ozonierungsgerät mittels elektrischer Entladung zur Ozonherstellung kontinuierlich behandelt wird und das erhaltene ozonhaltige Gas über eine Keramikfritte (7) unten in das Behandlungsgefäss eingeleitet wird.

5. Verfahren nach Anspruch 4, dadurch gekennzeichnet, dass der Ozongehalt durch eine Sonde (14) mittels eines Ozonanalysegerätes (13) gemessen wird und die Ozonzufuhr entsprechend dem gemessenen Wert gesteuert wird.

6. Verfahren nach einem der Ansprüche 1 bis 5, dadurch gekennzeichnet, dass der Wasserspiegel im Behandlungsgefäss mittels eines Niveaukontrollsystems (20) im wesentlichen konstant gehalten wird, wobei die Wasserzufuhr durch eine untere und obere Messonde (20A, 20B) gesteuert wird.

7. Verfahren nach Anspruch 6, dadurch gekennzeichnet, dass das Messsystem für die Niveaueinstellung weitere Sonden aufweist, welche eine Notabschaltung des Systems bewirken, sobald sich der Wasserstand ausserhalb des gewünschten Bereiches befindet.

8. Verfahren nach einem der Ansprüche 1 bis 7, dadurch gekennzeichnet, dass der Druck der Warmwasserversorgung im Bereich von 3x10⁵ Pa bis 7x10⁵ Pa und vorzugsweise bei 5x10⁵ Pa liegt.

9. Verfahren nach einem der Ansprüche 1 bis 8, dadurch gekennzeichnet, dass der Druck im Behandlungsgefäss 3x10⁴ bis 7x10⁴ Pa, vorzugsweise 5x10⁴ Pa beträgt.

10. Verfahren nach einem der Ansprüche 1 bis 9, dadurch gekennzeichnet, dass das Wärmeübertragungsmittel ein Boilersystem, ein Durchlauferhitzer oder ein Wärmetauscher ist.

11. Apparatur zur Ozonbehandlung von Warmwasser zu dessen Desinfektion in einer Warmwasserversorgungsanlage eines Gebäudes, gekennzeichnet durch
eine Wasserzufuhrleitung (1),
ein Wärmeübertragungsmittel (1A) zur Erwärmung des Wassers,
ein Behandlungsgefäss (3) mit
einer Warmwasserzuleitung (1) mit einem Reduzierventil (2) zur Verminderung des höheren Betriebsdruckes des Leitungssystems (1) auf den tieferen Druck des Behandlungsgefässes (3),
einem Gerät (4) zur Herstellung eines ozonhaltiges Gases mit einer Zuleitung (5) zum Behandlungsgefäss (3), und
einer Gasableitung (12) für das aus dem Wasser austretende restliche Gas
mindestens eine Ableitung (21) für das behandelte Wasser vom Behandlungsgefäss zum Verbraucher,
eine Pumpe, die an der Ableitung angeordnet ist, und zur Erhöhung des Druckes des behandelten Wassers auf den höheren Betriebsdruck des Wasserleitungssystems (25) dient.

12. Apparatur nach Anspruch 11, dadurch gekennzeichnet, dass sie zusätzlich noch mindestens eines der folgenden Merkmale aufweist:
eine Niveauregulierungsvorrichtung, welche den Wasserstand im Behandlungsgefäss (3) auf einem vorbestimmten Niveau hält,
ein Ozonanalysegerät (13), das über eine Sonde (14) den Ozongehalt im Wasser bestimmt, und
eine Steuervorrichtung, welche die Zufuhr von Wasser und ozonhaltigem Gas anhand des Niveaus und des Ozongehaltes des Wassers steuert.

13. Apparatur nach Anspruch 11 oder 12, dadurch gekennzeichnet, dass zusätzlich ein Mittel für die Einstellung des pH-Wertes angeordnet ist.

## Claims

1. Method for the ozone treatment of hot water, for its disinfection in a hot water supply system of a building, which system comprises a feeding pipe (1), a heat transfer means (1A), an ozone treatment device (3,4,5,6,7) and a distribution system (25) which leads to the users, characterised in that the warm water is led from the heat transfer means (1A), under a reduction of pressure, into a treatment tank (3) having the ozone treatment device (4,5,6,6A,7), so that the pressure in the treatment tank (3) is less than the operating pressure of the hot water supply system, an ozone-containing gas (8) is introduced continuously into the water in the treatment tank, this passes through the water in the form of bubbles, ozone being given up to the water, and the gas then undergoing transition into a gas phase in the upper section (11) of the tank, from which the gas is drawn off, and the treated water is then conducted, under an increase of pressure to the operating pressure of the warm water supply system, to the distribution system (25) of the building.

2. Method according to claim 1, characterised in that the treatment tank (3) has the shape of a column.

3. Method according to claim 1 or 2, characterised in that the pH is adjusted by means of an automatic neutralisation system controlled by a probe (17) by introducing an acid or a base into the water.

4. Method according to one of the claims 1 to 3, characterised in that the ozone-containing gas is oxygen, which is continuously treated using an ozoniser for the generation of ozone by means of electrical discharge and the ozone-containing gas obtained is led over ceramic frit (7) below in the treatment tank.

5. Method according to claim 4 characterised in that the ozone content is measured by a probe (14) by means of a device for ozone analysis (13) and the ozone supply controlled corresponding to the measured value.

6. Method according to one of the claims 1 to 5, characterised in that the water level in the treatment tank is kept essentially constant by means of a level regulating system (20), the water supply being controlled by an upper and a lower measuring probe (20A, 20B).

7. Method according to claim 6, characterised in that the measuring system has further probes for level adjustment, which probes cause an emergency shutdown of the system as soon as the water level is outside the desired range.

8. Method according to one of the claims 1 to 7, characterised in that the pressure in the hot water supply system is in the range of 3x10⁵ Pa to 7x10⁵, and preferably 5x10⁵.

9. Method according to one of the claims 1 to 8, characterised in that the pressure in the treatment tank is in the range of 3x10⁴ to 7x10⁴, preferably 5x10⁴.

10. Method according to one of the claims 1 to 9, characterised in that the heat transfer means is a boiler system, a flow heater or a heat exchanger.

11. Apparatus for ozone treatment of hot water for its disinfection in a hot water supply system of a building, characterised by
a water feeding pipe (1),
a heat transfer means (1A) for heating the water,
a treatment tank (3) with
a water feeding pipe (1) with a reducing valve (2) to decrease the higher operational pressure of the supply system (1) to the lower pressure of the treatment tank (3),
a device (4) for generation of an ozone-containing gas with a feeding pipe (5) to the treatment tank (3), and
a gas take off (12) for the remaining gas coming out of the water, at least one drain (21) for the treated water from the treatment tank to the user, a pump, which is disposed at the drain, and which serves to increase the pressure of the treated water to the higher operational pressure of the water supply system (25).

12. Apparatus according to claim 11, characterised in that it has additionally at least one of the following features:
a level regulating device, which keeps the water level in the treatment tank (3) at a predetermined level,
a device for ozone analysis (13), which determines the ozone content of the water by means of a probe (14), and
a control device, which controls the supply of water and ozone-containing gas on the basis of the level and the ozone content of the water.

13. Apparatus according to claim 11 or 12, characterised in that there is additionally a means for adjusting the pH.

## Revendications

1. Procédé de traitement à l'ozone pour la désinfection d'eau dans une installation d'alimentation en eau d'un immeuble, ladite installation comprenant une alimentation (1), un moyen de transmission de chaleur (1A), un dispositif de traitement à l'ozone (3,4,5,6,7) et un système de distribution (25), conduisant aux utilisateurs, caractérisé en ce que l'eau chaude est conduite à pression réduite depuis le dispositif de transmission de chaleur (1A) vers un réservoir de traitement (3) muni d'un dispositif de traitement à l'ozone (4,5,6,6A,7), la pression dans le réservoir de traitement (3) étant inférieure à la pression de service du système de distribution d'eau, un gaz (8) contenant de l'ozone étant introduit de manière continue dans l'eau (9) dans le réservoir de traitement et traversant l'eau sous la forme d'un courant gazeux, l'ozone étant libéré dans l'eau, le gaz étant ensuite transféré sous forme gazeuse dans la portion supérieure (11) du réservoir de laquelle le gaz est éliminé, l'eau traitée étant ensuite conduite, après augmentation de pression à la pression de service de l'installation d'alimentation d'eau chaude, vers le système de distribution (25) de l'immeuble.

2. Procédé selon la revendication 1, caractérisé en ce que le réservoir de traitement (3) a la forme d'une colonne.

3. Procédé selon l'une des revendications 1 ou 2, caractérisé en ce que la valeur du pH est réglée par un système de neutralisation automatique, commandé par une sonde (17), par lequel de l'acide, respectivement une base, est introduite dans l'eau.

4. Procédé selon l'une des revendications 1 à 3, caractérisé en ce que le gaz contenant de l'ozone est de l'oxygène, lequel est traité de manière continue dans un dispositif d'ozonation au moyen d'une charge électrique pour obtenir de l'ozone, le gaz contenant de l'ozone ainsi obtenu étant introduit à travers une céramique frittée (7) au bas du réservoir de traitement.

5. Procédé selon la revendication 4, caractérisé en ce que le taux d'ozone est mesuré par une sonde (14) au moyen d'un dispositif d'analyse d'ozone (13), l'apport d'ozone étant commandé selon la valeur mesurée.

6. Procédé selon l'une des revendications 1 à 5, caractérisé en ce que le niveau d'eau dans le réservoir de traitement est maintenu essentiellement constant par un système de contrôle de niveau (20), l'apport d'eau étant commandé par une sonde de mesure inférieure et une sonde de mesure supérieure (20A,20B).

7. Procédé selon la revendication 6, caractérisé en ce que le système de mesure pour le réglage de niveau comprend d'autres sondes, commandant un arrêt d'urgence du système dès que le niveau d'eau se trouve hors d'une plage déterminée.

8. Procédé selon l'une des revendications 1 à 7, caractérisé en ce que la pression de traitement de l'eau est comprise entre 3 x 10⁵ Pa et 7 x 10⁵ Pa, étant de préférence de 5 x 10⁵ Pa.

9. Procédé selon l'une des revendications 1 à 8, caractérisé en ce que la pression dans le réservoir de traitement est comprise entre 3 x 10⁴ Pa et 7 x 10⁴ Pa, étant de préférence de 5 x 10⁴Pa.

10. Procédé selon l'une des revendications 1 à 9, caractérisé en ce que le moyen de transmission de chaleur est un boiler, un chauffage par passage ou un plongeur de chauffage.

11. Appareil de traitement à l'ozone pour la désinfection d'eau dans une installation d'alimentation en eau d'un immeuble, caractérisé en ce qu'il comprend :
une alimentation (1),
un moyen de transmission de chaleur (1A) pour le chauffage de l'eau,
un réservoir de traitement (3) comprenant :
une alimentation en eau (1) avec une vanne de réduction (2) pour diminuer la plus haute pression de service de l'alimentation (1) à la plus faible pression du réservoir de traitement (3),
un dispositif (4) d'obtention d'un gaz contenant de l'ozone avec une alimentation (5) vers le réservoir de traitement (3), et
une sortie de gaz(12) pour éliminer le gaz résiduel sortant de l'eau,
au moins une sortie (21) pour l'eau traitée depuis le réservoir de traitement (3) vers l'utilisateur,
une pompe, installée sur la sortie, pour augmenter la pression de l'eau traitée à la pression de service plus élevée du système de distribution (25).

12. Appareil selon la revendication 11, caractérisé en ce qu'il comprend de plus au moins un des dispositifs suivants :
un dispositif de réglage de niveau maintenant le niveau d'eau dans le réservoir de traitement (3) à un niveau déterminé,
un dispositif d'analyse d'ozone (13) destiné à contrôler par une sonde (14) le taux d'ozone dans l'eau,
un dispositif de commande commandant l'apport d'eau et du gaz contenant de l'ozone selon le niveau et la concentration d'ozone dans l'eau

13. Appareil selon l'une des revendications 11 ou 12, caractérisé en ce qu'il comprend en outre un moyen de réglage de la valeur du pH.
